# EUROPÄISCHE PATENTSCHRIFT

(11) **EP 4 190 595 B1**
(45) Veröffentlichungstag und Bekanntmachung des Hinweises auf die Patenterteilung: **16.10.2024**
(21) Anmeldenummer: 22205227.6
(22) Anmeldetag: 03.11.2022
(51) Int. Cl.: B60C 11/24

(54) **VERFAHREN ZUR BEWERTUNG DER ZEITLICHEN ENTWICKLUNG DER PROFILTIEFE EINES FAHRZEUGREIFENS**
METHOD FOR EVALUATING THE EVOLUTION OVER TIME OF THE TREAD DEPTH OF A VEHICLE TYRE
PROCÉDÉ D'ÉVALUATION DU DÉVELOPPEMENT TEMPOREL DE LA PROFONDEUR DE SCULPTURE D'UN PNEU DE VÉHICULE

(30) Priorität: 01.12.2021 DE 102021213641
(43) Veröffentlichungstag der Anmeldung: 07.06.2023
(73) Patentinhaber: Continental Reifen Deutschland GmbH, 30175 Hannover (DE)
(72) Erfinder: Sahlmüller, Baldo, 30165 Hannover (DE); Guinart, Nicolas, 30165 Hannover (DE); Welser, Joachim, 30165 Hannover (DE); Lehn, Michael, 30165 Hannover (DE); Cyllik, Adrian, 30165 Hannover (DE)
(74) Vertreter: Continental Corporation

(56) Entgegenhaltungen:
- EP-A1- 3 789 215
- EP-A1- 3 871 906
- DE-A1- 102012 108 348
- DE-A1- 102014 214 465
- DE-A1- 102015 216 210
- DE-A1- 102015 216 212
- DE-A1- 102020 203 168
- US-A1- 2020 393 243

## Beschreibung

Die Erfindung betrifft ein Verfahren zur Bewertung der zeitlichen Entwicklung der Profiltiefe eines Laufstreifens eines Fahrzeugreifens.

Die fortschreitende technische Entwicklung und die zunehmende Digitalisierung betreffen insbesondere auch den Bereich der Fahrzeugtechnik und der Fahrzeugreifen. Es besteht ein fortgesetztes Interesse daran, bei den in Fahrzeugen eingesetzten Komponenten kontinuierlich Betriebsdaten zu erfassen, um beispielsweise die Leistungsfähigkeit und Betriebssicherheit kontinuierlich zu überwachen. Eine wichtige Information, die beispielsweise bei Fahrzeugreifen überwacht werden kann, ist dabei die Profiltiefe des Laufstreifens, da dieser Wert regelmäßig gut mit der Haltbarkeit und dem Zustand der Reifen korreliert und beispielsweise dafür genutzt werden kann, den optimalen Wechselzeitpunkt für Reifen zu bestimmen.

Es besteht grundsätzlich ein großes Interesse daran, die Profiltiefe von Reifen im Betrieb individuell für jeden Reifen und möglichst akkurat abschätzen und/oder berechnen zu können, sodass für sämtliche Reifen eines Fahrzeugs jeweils ein präziser individueller Wert über die Profiltiefe des Laufstreifens verfügbar ist.

Aus dem Stand der Technik sind verschiedene Verfahren bekannt, welche durch eine Messung der Radialbeschleunigung eines Fahrzeugreifens mithilfe eines Beschleunigungssensors am Innerliner dieses Fahrzeugreifens Rückschlüsse auf die Profiltiefe des Laufstreifens des Fahrzeugreifens erlauben.

So offenbart die DE 10 2015 216 210 A1 beispielsweise ein Verfahren, welches über ein lineares Gleichungssystem eine Berechnung der Profiltiefe aus der Radialbeschleunigung erlaubt. Die EP 2 172 759 B1 berechnet die Profiltiefe aus dem Minimum bzw. Maximum des zeitlichen Differentials der Radialbeschleunigung innerhalb eines definierten Zeitintervalls, insbesondere innerhalb eines Zeitintervalls, in welchem der Beschleunigungssensor die Radaufstandsfläche durchläuft.

Bei der Bestimmung der Profiltiefe auf diesem Wege müssen allerdings in der Regel komplizierte mathematische Rechenoperation verwendet werden. So ist beispielsweise die Berechnung eines zeitlichen Differentials nicht nur relativ zeitintensiv, sondern erfordert häufig auch zusätzliche Prozessorleistung und Zwischenspeicher in den das Differential berechnenden Datenverarbeitungseinrichtungen, was regelmäßig als nachteilig empfunden wird
Die DE 10 2008 006 566 A1 offenbart eine Ermittlung der Abnutzung eines Fahrzeugreifens, indem ein erster Zeitraum, in welchem der Beschleunigungssensor eine Reifenaufstandszone durchläuft, mit einem zweiten Zeitraum, in welchem der Fahrzeugreifen eine komplette Umdrehung vollzieht, in Relation gesetzt wird. In solcherlei Verfahren wird es regelmäßig als nachteilig empfunden, dass hierbei Beschleunigungssensoren benötigt werden, welche Messungen über zumindest zwei Rotationen des Fahrzeugreifens aufnehmen und somit nicht energieeffizient arbeiten können und relativ große Datenmengen erzeugen.

Die primäre Aufgabe der vorliegenden Erfindung war es, die aus dem Stand der Technik bekannten Nachteile auszuräumen oder zumindest zu verringern.

Insoweit war es eine Aufgabe der vorliegenden Erfindung, ein Verfahren zur Bewertung der zeitlichen Entwicklung der Profiltiefe eines Fahrzeugreifens anzugeben, welches mit möglichst geringem Rechen- und Speicheraufwand, insbesondere lediglich unter Verwendung von einfachen Rechenoperationen, die Bewertung der Profiltiefe von Fahrzeugreifen erlaubt.

Zudem war es eine Aufgabe der vorliegenden Erfindung, ein Verfahren mit einer Bewertungsoperation in einem vergleichsweise kurzen Zeitintervall zu ermöglichen, wobei das Zeitintervall vorzugsweise kleiner oder gleich dem für eine volle Rotation des Fahrzeugreifens benötigten Zeitraums sein sollte.

Hierbei war es anstrebenswert, dass die im Verfahren verwendeten elektrischen Einrichtungen, insbesondere die verwendeten Sensoren, möglichst energieeffizient betreibbar sein sollen, sodass unter anderem die Haltbarkeit dieser Einrichtungen erhöht werden kann.

Es war eine zusätzliche Aufgabe der vorliegenden Erfindung, dass das anzugebende Verfahren so ausgestaltet werden sollte, dass die Aufnahme von irrelevanten Daten, welche nicht für das erfindungsgemäße Verfahren benötigt werden, bestmöglich vermieden werden sollte.

Hierbei war es eine Aufgabe der vorliegenden Erfindung, dass das anzugebende Verfahren apparativ möglichst einfach ausgestaltet und idealerweise mit solchen Mitteln ausführbar sein sollte, die von einem modernen Fahrzeug ohnehin zur Verfügung gestellt werden können, sodass die Bewertung der Profiltiefe bevorzugt sogar dezentral erfolgen kann. Es war dabei wünschenswert, dass der Vorgang der Bewertung für den Fahrzeugführer nicht mit zusätzlichen Arbeitsschritten verbunden sein sollte.

Die Erfinder der vorliegenden Erfindung haben nunmehr erkannt, dass sich die vorstehend beschriebenen Aufgaben überraschenderweise lösen lassen, wenn die Bewertung der zeitlichen Entwicklung der Profiltiefe von Fahrzeugreifen unter Verwendung von Messwerten zu diskreten Zeitpunkten in einem Zeitintervall, umfassend zumindest den Durchlauf des Beschleunigungssensors durch die Reifenaufstandszone und die daran angrenzenden Deformationsbereiche, erfolgt, wie es in den Ansprüchen definiert ist, um den erforderlichen Berechnungsaufwand zu minimieren.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft ein Verfahren zur Bewertung der zeitlichen Entwicklung der Profiltiefe eines Laufstreifens eines Fahrzeugreifens mit einem Beschleunigungssensor, wobei der Beschleunigungssensor im Bereich des Laufstreifens innerhalb des Fahrzeugreifens oder auf der Reifeninnenseite angeordnet ist,
wobei für eine Bewertungsoperation die vom Beschleunigungssensor im Betrieb des Fahrzeugreifens erfahrene Beschleunigung in radialer Richtung während eines Zeitintervalls gemessen wird, wobei der Beschleunigungssensor im Zeitintervall durch die Reifenaufstandszone und die daran angrenzenden Deformationsbereiche bewegt wird,
wobei ausgehend vom Verlauf der gemessenen Beschleunigung im Zeitintervall ein erster Zeitpunkt A bestimmt wird, an dem die Beschleunigung unter einen ersten Grenzwert G1 sinkt, wobei ein auf A folgender zweiter Zeitpunkt B bestimmt wird, an dem die Beschleunigung unter einen zweiten Grenzwert G2 sinkt, wobei ein auf B folgender dritter Zeitpunkt C bestimmt wird, an dem die Beschleunigung über den zweiten Grenzwert G2 steigt, wobei ein auf C folgender vierter Zeitpunkt D bestimmt wird, an dem die Beschleunigung über den ersten Grenzwert G1 steigt, wobei der erste Grenzwert G1 und der zweite Grenzwert G2 ausgehend vom Verlauf der Beschleunigung im Zeitintervall festgelegt werden ,
wobei eine erste Zeitdifferenz U zwischen den Zeitpunkten A und D sowie eine zweite Zeitdifferenz V zwischen den Zeitpunkten B und C bestimmt wird, wobei ein Bewertungsquotient Z als Verhältnis von U und V bestimmt wird,
wobei die Bewertung der zeitlichen Entwicklung der Profiltiefe durch den Vergleich der Bewertungsquotienten Z erfolgt, welche für zwei oder mehrere verschiedenen Bewertungsoperationen bestimmt wurden.

Das erfindungsgemäße Verfahren dient der Bewertung der Profiltiefe des Laufstreifens von Fahrzeugreifen, insbesondere der Bewertung der zeitlichen Entwicklung der relativen Profiltiefe. Das Verfahren wird dabei vorzugsweise an einem Fahrzeug mit zumindest zwei oder mehr, bevorzugt vier oder mehr, Fahrzeugreifen, durchgeführt. Jedem Fahrzeugreifen ist erfindungsgemäß ein Beschleunigungssensor zugeordnet, welcher vorteilhafterweise auf der Reifeninnenseite des Fahrzeugreifens angeordnet ist. Der Ausdruck im Bereich des Laufstreifens bedeutet in Übereinstimmung mit dem fachmännischen Verständnis, dass der Beschleunigungssensor in radialer Richtung unmittelbar unterhalb des Laufstreifens oder unterhalb eines anderen Bauteils angeordnet ist, welches wiederum in radialer Richtung unterhalb des Laufstreifens angeordnet ist. In Übereinstimmung mit dem fachmännischen Verständnis ist der Beschleunigungssensor relativ zum Laufstreifen in radialer Richtung innen angeordnet, insbesondere in oder an der Reifenkrone, beispielsweise zwischen dem Laufstreifen und der Reifenkarkasse, zwischen den Karkasslagen der Reifenkarkasse oder in radialer Richtung innen an der Reifeninnenschicht. Beschleunigungssensoren sind dem Fachmann dabei grundsätzlich bekannt und können beispielsweise von Herstellern entsprechender Sensoren zugekauft und in Fahrzeugreifen eingesetzt werden.

Das erfindungsgemäße Verfahren nutzt aus, dass für die Bewertung der zeitlichen Entwicklung der Profiltiefe des Laufstreifens des Fahrzeugreifens nach Erkenntnis der Erfinder die Bestimmung diskreter Datenpunkte ausreicht, um aussagekräftige Berechnungen durchzuführen und qualitative Aussagen über die Profiltiefe bzw. deren relative zeitliche Entwicklung zu treffen. Insofern werden redundante mathematische Berechnungen sowie komplexe Operationen und somit auch die für das Verfahren benötigte Prozessorleistung, minimiert. Zudem müssen vorteilhafterweise weniger Daten für eine weitergehende Analyse zwischengespeichert werden, sodass die für das Verfahren benötigte Speichergröße reduziert werden kann.

Für eine Bewertungsoperation wird der Fahrzeugreifen, beziehungsweise ggf. das den Fahrzeugreifen umfassende Fahrzeug, bewegt, wobei das Bewegen insbesondere den üblichen Betrieb des Fahrzeugs bzw. Fahrzeugreifens darstellen kann, d. h. insbesondere das Fahren des Fahrzeugs im regulären Straßenbetrieb. Insofern wird eine praxisnahe Bewertungsoperation ermöglicht, welche somit nicht auf einem Teststand unter vordefinierten Bedingungen erfolgen muss.

Während der Bewegung des Fahrzeugreifens misst der Beschleunigungssensor die Radialbeschleunigung in einem definierten Zeitintervall. Die Radialbeschleunigung ist eine vektorielle Größe und im Allgemeinen zum Zentrum des Fahrzeugreifens gerichtet. Sie gibt an, wie schnell sich die Richtung der Geschwindigkeit bezüglich der Kreisbewegung des Fahrzeugreifens ändert.

Das definierte Zeitintervall umfasst erfindungsgemäß den Zeitraum, in welchem der Beschleunigungssensor die Reifenaufstandszone und die daran angrenzenden Deformationsbereiche durchläuft. Die Reifenaufstandszone ist dabei jener Bereich des Fahrzeugreifens, welcher im Betrieb eine Kontaktfläche zum Boden, insbesondere zur Straße, aufweist. Die Reifenaufstandszone ist eine Fläche, so dass der Fachmann versteht, dass der im Bereich des Laufstreifens lokalisierte Beschleunigungssensor so entlang einer Umlaufbahn um das Zentrum des Fahrzeugreifens läuft, dass die Umlaufbahn die Reifenaufstandszone und die daran angrenzenden Deformationsbereiche, bevorzugt vollständig, durchläuft. Die an die Reifenaufstandszone angrenzenden Deformationsbereiche sind die Teile des Fahrzeugreifens, die zwar keinen unmittelbaren Fahrbahnkontakt haben, jedoch durch das Aufsetzen des Reifens auf der Fahrbahn noch deformiert werden. Hierbei handelt es sich bei üblichen Reifendrücken jeweils um die unmittelbar an die Reifenaufstandszone angrenzenden Bereiche des Fahrzeugreifens. Der Fachmann kann die entsprechenden Deformationsbereiche und damit das kleinstmögliche Zeitintervall in der Praxis zwanglos identifizieren. In jedem Fall durchläuft der Beschleunigungssensor die Reifenaufstandszone und die daran angrenzenden Deformationsbereiche im Zeitintervall dann ausreichend, wenn sich im Zeitintervall für die gemessene Radialbeschleunigung zumindest drei Extrempunkte zeigen, je nach Auftragung beispielsweise zwei Maxima und ein Minimum, die den Durchlauf durch die beiden Deformationsbereiche bzw. den Durchlauf durch die Reifenaufstandszone kennzeichnen.

Im Rahmen des erfindungsgemäßen Verfahrens wird der Beschleunigungssensor im Fahrzeugreifen ausgelesen. Die erhaltene Radialbeschleunigung in Abhängigkeit von der Zeit kann beispielsweise als Datenkurve oder Funktionsgraph in ein kartesisches Koordinatensystem eingetragen werden.

Erfindungsgemäß wird aus den Messdaten der Radialbeschleunigung ein Zeitpunkt A bestimmt, zu welchem die Beschleunigung unter einen ersten Grenzwert G1 sinkt und ein hierauf folgender Zeitpunkt B, zu welchem die Beschleunigung unter einen zweiten Grenzwert G2 sinkt, sowie ein hierauf folgender Zeitpunkt C, zu welchem die Beschleunigung über den zweiten Grenzwert G2 steigt und ein hierauf folgender Zeitpunkt D, zu welchem die Beschleunigung über den ersten Grenzwert G1 steigt. Der Fachmann versteht insoweit, dass die Zeitpunkte A, B, C und D zeitlich hintereinander liegen müssen und entsprechend in dem gleichen Zeitintervall und für den gleichen Durchlauf durch die Reifenaufstandszone und die daran angrenzenden Deformationsbereiche bestimmt werden.

Der erste Grenzwert G1 und der zweite Grenzwert G2 werden ausgehend vom Verlauf der Beschleunigung im Zeitintervall festgelegt, beispielsweise indem sie anhand eines Richtwertes bemessen werden. Der Richtwert wird vorzugsweise durch den Verlauf des Funktionsgraphen der Radialbeschleunigung im Zeitintervall bestimmt, wie es auch nachfolgend offenbart wird. Beispielsweise wird der Richtwert über eine Mittelung der Radialbeschleunigung im Zeitintervall berechnet und entsprechend festgelegt.

Das erfindungsgemäße Verfahren umfasst ebenfalls die Bestimmung einer ersten Zeitdifferenz U zwischen den Zeitpunkten A und D sowie die Bestimmung einer zweiten Zeitdifferenz V zwischen den Zeitpunkten B und C. Der hieraus ableitbare Bewertungsquotient Z setzt die Zeitdifferenzen U und V zueinander in Relation und stellt das Resultat einer Bewertungsoperation dar.

Die Bewertung der zeitlichen Entwicklung der Profiltiefe erfolgt im erfindungsgemäßen Verfahren durch den Vergleich zwischen Resultaten verschiedener Bewertungsoperationen, also durch den Vergleich verschiedener Bewertungsquotienten Z, die in verschiedenen Zeitintervall bestimmt wurden. In einer besonders bevorzugten Ausführungsform wird der Bewertungsquotient Z so gebildet, dass er mit abnehmender Profiltiefe zunimmt. Das erfindungsgemäße Verfahren wird in den meisten Fällen eine relative Änderung der Profiltiefe ausgeben oder das Über- oder Unterschreiten eines bestimmen Änderungsumfang überwachen, was für die meisten Anwendungen ausreichend ist. Der in der Praxis häufig weniger relevante absolute Wert der Profiltiefe kann beispielsweise durch die Einbeziehung weiterer Fahrzeugreifendaten erfolgen, wie der Zusammensetzung des Fahrzeugreifens oder seiner Größe, sowie von Betriebsparametern wie Reifendruck und Radlast bestimmt werden, beispielsweise unter Rückgriff auf Eichkurven oder Referenzwerte.

Auch wenn das erfindungsgemäße Verfahren prinzipiell für jede Art von Reifen einsetzbar ist, sind Fahrzeugluftreifen explizit bevorzugt, insbesondere, weil in diesen die Beschleunigungssensoren vorteilhafterweise auf der Rückseite der Laufstreifen am Innerliner angebracht werden können, wo eine möglichst genaue Erfassung der Radialbeschleunigung möglich ist. Bevorzugt ist insofern ein erfindungsgemäßes Verfahren, wobei der Fahrzeugreifen ein Fahrzeugluftreifen ist.

Es kann als großer Vorteil des erfindungsgemäßen Verfahrens gesehen werden, dass der benötigte Beschleunigungssensor in ein Sensormodul integriert werden kann, welches zusätzliche Funktionalitäten eröffnet, beispielsweise eine Beobachtung des Reifendrucks, wodurch eine besonders zuverlässige Gesamtinformation über den Zustand des Fahrzeugreifens gewonnen werden kann. Grundsätzlich bevorzugt ist demnach ein erfindungsgemäßes Verfahren, wobei der Beschleunigungssensor Bestandteil eines Sensormoduls ist, wobei das Sensormodul bevorzugt einen oder mehrere weitere Sensoren umfasst, insbesondere Sensoren zur Bestimmung des Reifendrucks.

Der ermittelte Reifendruck kann in synergistischer Weise dafür verwendet werden, eine mögliche Druckanhängigkeit der Zeitdifferenzen U und V bzw. des Bewertungskoeffizienten Z zu berücksichtigen, die sich aus einer veränderten Deformation des Fahrzeugreifens ergibt. Dies kann beispielsweise dadurch geschehen, dass auf dem Sensor eine konstante oder lineare Korrekturfunktion für die Zeitdifferenzen bzw. den Bewertungskoeffizienten hinterlegt wird, mit der diese Werte in Abhängigkeit vom gemessenen Druck korrigiert werden können. Sofern eine entsprechende Korrektur der Werte für U und V vorgesehen wird, wird der Bewertungskoeffizienten Z bevorzugt mit den korrigierten Werten berechnet.

Mit Blick auf die Genauigkeit der mittels des Beschleunigungssensors ermittelten Beschleunigungswerte ist es vorteilhaft, diesen am Innerliner des Fahrzeugreifens anzuordnen, insbesondere auf der dem Laufstreifen abgewandten Seite. Bevorzugt ist insofern ein erfindungsgemäßes Verfahren, wobei der Beschleunigungssensor im Bereich des Laufstreifens auf der Reifeninnenseite angeordnet ist, bevorzugt auf der Reifeninnenschicht.

Wie vorstehend erläutert, umfasst das Zeitintervall, in welchem eine Messung der Radialbeschleunigung vorgenommen wird, zumindest den Zeitraum, in welchem der Beschleunigungssensor durch die Reifenaufstandszone und die daran angrenzenden Deformationsbereiche bewegt wird. Grundsätzlich ist eine Erfassung von Radialbeschleunigungswerten in diesem Zeitraum ausreichend, um das erfindungsgemäße Verfahren durchzuführen. In vielen Anwendungen ist es allerdings von Vorteil, wenn das Zeitintervall eine größere Zeitspanne umfasst, insbesondere eine Zeitspanne, welche der Fahrzeugreifen für einen kompletten Umlauf benötigt. Das Zeitintervall kann auch mehrere Umdrehungen des Fahrzeugreifens umfassen. In einer besonders bevorzugten Ausführungsform dienen die Beschleunigungswerte, welche der Beschleunigungssensor im Zeitintervall außerhalb der Reifenaufstandszone und der daran angrenzenden Deformationsbereiche misst, der Ermittlung des ersten Grenzwertes G1 und/oder des zweiten Grenzwertes G2. Bevorzugt ist demnach ein erfindungsgemäßes Verfahren, wobei der Beschleunigungssensor im Zeitintervall zumindest teilweise außerhalb der Reifenaufstandszone und der daran angrenzenden Deformationsbereiche bewegt wird, wobei der Beschleunigungssensor im Zeitintervall bevorzugt zumindest eine halbe, besonders bevorzugt zumindest eine vollständige Rotation um die Rotationsachse des Fahrzeugreifens erfährt.

Im Lichte der vorstehenden Ausführungen ist dem Fachmann klar, dass die im Zeitintervall erfassten Radialbeschleunigungswerte nicht nur wie vorstehend beschrieben zur Ermittlung des Bewertungsquotienten Z, sondern in synergistischer Weise auch zur Bestimmung des ersten Grenzwertes G1 und/oder des zweiten Grenzwertes G2 Verwendung finden können. Da die Über- bzw. Unterschreitung der Grenzwerte die Ermittlung der Zeitpunkte A-D bedingt, ist es angesichts des typischen Beschleunigungsverlaufs im beim Durchlauf durch die Reifenaufstandszone und die daran angrenzenden Deformationsbereiche grundsätzlich von Vorteil, wenn die Grenzwerte nicht zu nah beieinanderliegen, damit die Zeitdifferenzen U und V, welche sich aus den Zeitpunkten A bis D errechnen, einen möglichst ausgeprägten Unterschied aufweisen. Insofern beruhen der erste Grenzwert G1 und der zweite Grenzwert G2 in einer besonders bevorzugten Ausführungsform auf einem Richtwert, welcher sich vorzugsweise aus den vom Beschleunigungssensor gemessenen Radialbeschleunigungswerten ergibt, insbesondere in einem Zeitintervall, in welchem die Radialbeschleunigungswerte im Wesentlichen konstant sind, beispielsweise, wenn sich der Beschleunigungssensor außerhalb, bevorzugt weit außerhalb, der Reifenaufstandszone und der daran angrenzenden Deformationsbereiche befindet. Hierbei ist es besonders bevorzugt, wenn der erste Grenzwert G1 im Wesentlichen dem ermittelten Richtwert entspricht und der zweite Grenzwert G2 nur einen Bruchteil des Richtwertes beträgt. Bevorzugt ist also ein erfindungsgemäßes Verfahren, wobei der erste Grenzwert G1 und der zweite Grenzwert G2 in Abhängigkeit von einem im Zeitintervall bestimmten Richtwert festgelegt werden, wobei der erste Grenzwert G1 bevorzugt auf einen Wert im Bereich von 70 bis 100 %, besonders bevorzugt von 80 bis 100 %, ganz besonders bevorzugt von 90 bis 100 %, insbesondere bevorzugt von 95 bis 100 %, des Richtwertes festgelegt wird. Bevorzugt ist zudem ein erfindungsgemäßes Verfahren, wobei der zweite Grenzwert G2 bevorzugt auf einen Wert im Bereich von 5 bis 30 %, besonders bevorzugt von 5 bis 25 %, ganz besonders bevorzugt von 5 bis 20 %, insbesondere bevorzugt von 5 bis 15 %, des Richtwertes festgelegt wird. Bevorzugt ist ebenso ein erfindungsgemäßes Verfahren, wobei der erste Grenzwert G1 und der zweite Grenzwert G2 sich bevorzugt um 60 bis 100%, besonders bevorzugt 70 bis 98 %, ganz besonders bevorzugt 80 bis 95 %, des Richtwertes unterscheiden.

Grundsätzlich ist es nicht ausgeschlossen, weitere Grenzwerte im erfindungsgemäßen Verfahren vorzusehen. In einer bevorzugten Ausführungsform wird zusätzlich zum ersten Grenzwert G1 und zweiten Grenzwert G2 ein dritter Grenzwert G3 ermittelt. Der dritte Grenzwert G3 kann beispielsweise als Initiator für die Ermittlung der Zeitpunkte A bis D dienen, sodass dieser dritte Grenzwert G3 zunächst überschritten werden muss, bevor die Zeitpunkte A bis D bestimmt werden können. Der dritte Grenzwert G3 kann sich ebenfalls am vorstehend beschriebenen Richtwert orientieren. Im vorstehend beschriebenen Fall, wenn sich der Richtwert aus demjenigen Zeitintervall ergibt, in welchem die Radialbeschleunigungswerte konstant sind, kann der dritte Grenzwert G3 beispielsweise oberhalb des Richtwertes liegen, insbesondere im Bereich von 105 bis 130 %, bevorzugt im Bereich von 110 bis 120 %, des Richtwertes liegt, wobei der dritte Grenzwert G3 alternativ im Bereich von 90 bis 100 %, bevorzugt im Bereich von 95 bis 100 %, der maximalen Beschleunigung liegt.

Mit Blick auf die vorstehenden Ausführungen kann der Richtwert, aus welchem vorzugsweise der erste Grenzwert G1 und der zweite Grenzwert G2 ermittelt werden, grundsätzlich auf verschiedene Arten ausgelegt werden. Die Erfinder haben erkannt, dass je nach Ausgangslage, insbesondere je nach Typus des Beschleunigungssensors und/oder Fahrzeugreifens, verschiedene Bezugsgrößen für den Richtwert bevorzugt sein können. Bevorzugt ist insofern ein erfindungsgemäßes Verfahren, wobei der Richtwert der maximalen Beschleunigung im Zeitintervall entspricht. Bevorzugt ist auch ein erfindungsgemäßes Verfahren, wobei der Richtwert der mittleren Beschleunigung im Zeitintervall entspricht. Bevorzugt ist ebenfalls ein erfindungsgemäßes Verfahren, wobei der Richtwert der mittleren Beschleunigung in den Teilen des Zeitintervalls entspricht, in denen der Beschleunigungssensor außerhalb der Reifenaufstandszone und der daran angrenzenden Deformationsbereiche bewegt wird. Es ist zudem eine erfindungsgemäßes Verfahren bevorzugt, wobei der Richtwert in Abhängigkeit von der Fahrzeuggeschwindigkeit und/oder der Rotationsgeschwindigkeit des Fahrzeugreifens aus einer Speichereinheit abgerufen wird.

Die Berechnung des Bewertungsquotienten Z ist ein wichtiger Bestandteil des erfindungsgemäßen Verfahrens. Vom mathematischen Standpunkt aus sind in verschiedenen Zeitintervallen ermittelte Bewertungsquotienten Z in jedem Falle vergleichbar, unabhängig davon, ob die Zeitdifferenz U für die Berechnung dieser Bewertungsquotienten Z den Dividend oder den Divisor darstellt oder ob ggf. weitere Multiplikatoren in das Verhältnis eingehen. Es ist für den Fachmann selbstverständlich, nicht Bewertungsquotienten Z zu vergleichen, welche unterschiedlich berechnet wurden, d.h. in einem vereinfachten Beispiel, dass ein Bewertungsquotient Z, welcher aus U/V gebildet wird, nicht mit einem Bewertungsquotient Z, welcher aus V/U gebildet wird, verglichen werden soll. Grundsätzlich bevorzugt ist also ein erfindungsgemäßes Verfahren, wobei der Bewertungsquotient Z als Quotient U/V oder V/U, bevorzugt V/U, bestimmt wird.

Wie vorstehend erläutert, basiert das erfindungsgemäße Verfahren auf der Auswertung des Verlaufs der Radialbeschleunigung in Abhängigkeit von der Zeit, wobei sich bevorzugt auch der Richtwert aus der Radialbeschleunigung errechnet. Nach Einschätzung der Erfinder ist es deshalb vorteilhaft, wenn die mittlere Radialbeschleunigung bei einer Bewertungsoperation möglichst gleichbleibend ist. Insofern sollte für besonders gute Ergebnisse eine Bewertungsoperation beispielsweise während eines Beschleunigungs- oder Abbremsvorgangs des Fahrzeugreifens, beziehungsweise des den Fahrzeugreifen enthaltenden Fahrzeugs, vermieden werden. Zudem ist es nach Erkenntnis der Erfinder zum Erhalt eines gut auswertbaren Datensatzes vorteilhaft, bei der Durchführung des erfindungsgemäßen Verfahrens eine Untergrenze für die Radialbeschleunigung anzusetzen, da beispielsweise durch zu langsame Bewegung der Fahrzeugreifen die Durchführung des erfindungsgemäßen Verfahrens erschwert wird. Dies ist dadurch bedingt, dass in diesem Fall die Messung der Radialbeschleunigung durch den Beschleunigungssensor häufig anfälliger für Störungen ist, insbesondere irregulär auftreten Ausschläge bzw. Peaks im Funktionsgraphen. Bevorzugt ist also ein erfindungsgemäßes Verfahren, wobei die Bewertungsoperation nur durchgeführt wird, wenn die gemessene Beschleunigung oberhalb eines bestimmten Schwellenwertes liegt. Bevorzugt ist insofern auch ein erfindungsgemäßes Verfahren, wobei die Bewertungsoperation nur durchgeführt wird, wenn die gemessene Beschleunigung in den Teilen des Zeitintervalls, in denen der Beschleunigungssensor außerhalb der Reifenaufstandszone und der daran angrenzenden Deformationsbereiche bewegt wird, im Wesentlichen konstant ist.

Die Bewertung der zeitlichen Entwicklung der Profiltiefe ergibt sich im erfindungsgemäßen Verfahren vorteilhafterweise durch den Vergleich von in unterschiedlichen Zeitintervallen, insbesondere in aufeinanderfolgenden Zeitintervallen, bestimmten Bewertungsquotienten Z. Die Profiltiefe nimmt im Betrieb insbesondere durch Abrieb beziehungsweise Abnutzung des Fahrzeugreifens sukzessive ab. Insofern ist es nach Einschätzung der Erfinder mit Blick auf einen energieeffizienten Betrieb grundsätzlich zielführend, einen minimalen Zeitabstand zwischen den Zeitintervallen vorzusehen, in welchen eine Messung vorgenommen wird, da aussagekräftige Änderungen ohnehin auf Zeitskalen erfolgen, die groß im Vergleich zu üblichen Zeitintervallen des Verfahrens sind. Dieser Zeitabstand kann beispielsweise anhand von extern zur Verfügung gestellten Fahrinformationen eines den Fahrzeugreifen enthaltenden Fahrzeugs variabel angepasst werden. Bevorzugt ist entsprechend ein erfindungsgemäßes Verfahren, wobei in vorbestimmten Zeitabständen Bewertungsoperationen durchgeführt werden, wobei die vorbestimmten Zeitabstände bevorzugt im Bereich von 0,5 und 48 h, bevorzugt 1,0 und 24 h, besonders bevorzugt 2 bis 12 h, liegen.

Für die meisten Anwendungen explizit bevorzugt ist ein erfindungsgemäßes Verfahren, wobei das Auslesen des Beschleunigungssensors durch zumindest eine im Fahrzeug angeordnete Datenverarbeitungseinrichtung erfolgt. In einer besonders bevorzugten Ausführungsform weist der Beschleunigungssensor selbst eine Datenverarbeitungseinrichtung auf, sodass der Beschleunigungssensor vorteilhafterweise als dezentrale Einheit fungieren kann, die wesentliche Schritte des erfindungsgemäßen Verfahrens selbstständig ausführen kann, ohne dass hierfür separate Ausleseeinheiten erforderlich sind. In einer anderen bevorzugten Ausführungsform erfolgt der Transfer der Beschleunigungswerte und/oder der errechneten Zeitdifferenzen und/oder Bewertungsquotienten des Beschleunigungssensors durch eine dezentrale, beispielsweise im Fahrzeug angeordnete, elektronischen Datenverarbeitungseinrichtung mittels drahtloser Datenübertragung, wobei hierfür verschiedene Technologien zur Verfügung stehen, die dem Fachmann bekannt sind. Bevorzugt ist folglich ein erfindungsgemäßes Verfahren, wobei der Beschleunigungssensor eine erste Datenverarbeitungseinrichtung umfasst und/oder wobei die gemessene Beschleunigung vom Beschleunigungssensor mittels drahtloser Datenübertragung an eine im Fahrzeug angeordnete zweite Datenverarbeitungseinrichtung übermittelt wird.

Mit Blick auf die Ermittlung des Bewertungsquotienten Z aus den Radialbeschleunigungswerten ist es grundsätzlich bevorzugt, wenn der Beschleunigungssensor selbst eine Datenverarbeitungseinrichtung enthält, welche die von ihm gemessenen Daten auswertet und gegebenenfalls erhaltene Resultate miteinander vergleicht. Grundsätzlich ist es allerdings auch möglich, dass der Sensor die ggf. zumindest teilweise aufbereiteten Daten an eine weitere Datenverarbeitungseinrichtung, insbesondere drahtlos, überträgt. Bevorzugt ist somit ein erfindungsgemäßes Verfahren, wobei die erste Datenverarbeitungseinrichtung und/oder die zweite Datenverarbeitungseinrichtung dazu eingerichtet sind, den Bewertungsquotienten Z zu berechnen, wobei die erste Datenverarbeitungseinrichtung und/oder die zweite Datenverarbeitungseinrichtung dazu eingerichtet sind, verschiedene Bewertungsquotienten Z miteinander zu vergleichen.

Zusätzlich oder alternativ können die gemessene Beschleunigungen und/oder die daraus abgeleiteten Kenngrößen mittels drahtloser Datenübertragung auch an eine außerhalb des Fahrzeugs befindliche zentrale dritte Datenverarbeitungseinrichtung übertragen werden, die dazu eingerichtet ist, den Bewertungsquotienten Z zu berechnen und/oder verschiedene Bewertungsquotienten Z miteinander zu vergleichen.

Grundsätzlich müssen für eine Bestimmung des absoluten Wertes der Profiltiefe weitere Bezugsgrößen des Fahrzeugreifens miteinbezogen werden. Dies ist unter anderem darauf zurückzuführen, dass durch die erfindungsgemäße Auswertung der Radialbeschleunigung insbesondere die relative zeitliche Änderung der Profiltiefe ermittelbar ist. Um den absoluten Wert der Profiltiefe zu errechnen, können die ermittelten Bewertungsquotienten Z mit kalibrierten Bewertungsquotienten Z verglichen werden, die unter vorgegebenen Bedingungen ermittelt wurden. Bevorzugt ist daher ein erfindungsgemäßes Verfahren, wobei die absolute Profiltiefe durch den Vergleich des Bewertungsquotienten Z mit vorbestimmten Bewertungsquotienten Z berechnet oder abgeschätzt wird, wobei bevorzugt eine oder mehrere weitere Informationen berücksichtigt werden, die ausgewählt sind aus der Gruppe bestehend aus Reifenmodell, Reifengröße, Reifendruck, Radlast und ursprünglicher Profiltiefe.

Im Rahmen des erfindungsgemäßen Verfahrens wird der ermittelte Bewertungsquotient Z mit anderen zuvor ermittelten Bewertungsquotienten Z verglichen. Für einen Bewertungsquotienten Z, welcher als Quotient der Zeitdifferenzen V/U angegeben wird, wird der absolute Wert von Z mit abnehmender Profiltiefe steigen. Für einen als Quotient der Zeitdifferenzen U/V angegebenen Bewertungsquotienten Z wird dessen absoluter Wert mit abnehmender Profiltiefe hingegen fallen. Entsprechend ist es besonders bevorzugt, wenn ab der Über- bzw. Unterschreitung eines vorbestimmten Wertes für den Bewertungsquotienten Z ein Warnsignal ausgegeben wird, insbesondere an eine den Fahrzeugreifen wechselnde Person, beispielsweise an den Besitzer eines den Fahrzeugreifen enthaltenden Fahrzeugs oder das Flottenmanagement eines Fuhrparks. Bevorzugt ist deshalb ein erfindungsgemäßes Verfahren, wobei ab einem vorgegebenen Wert für den Bewertungsquotienten Z ein Warnsignal ausgegeben wird, insbesondere auf eine digitale Anzeigevorrichtung in einem Fahrzeug und/oder in einer zentralen Wartungsstelle.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Darstellung zweier Funktionsgraphen der Radialbeschleunigung gegen die Zeit für einen Fahrzeugreifen mit großer (durchgehende Linie) und niedriger Profiltiefe (gestrichelte Linie), und
- Fig. 2: eine schematische Darstellung des Zusammenhangs zwischen dem Bewertungsquotienten Z für unterschiedliche Breiten der Reifenaufstandszone für verschiedene Radlasten L und Abnutzungszustände W.

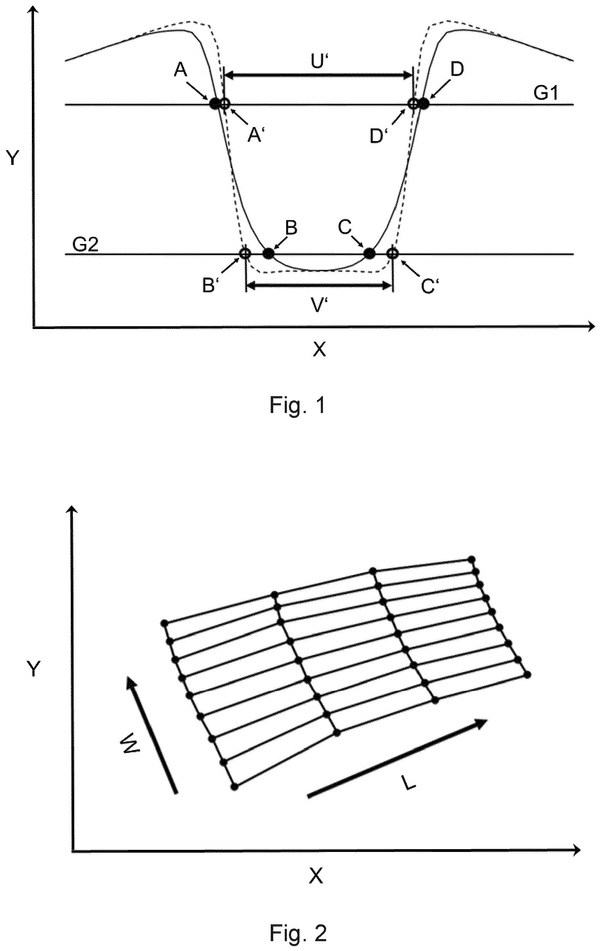

Fig. 1 zeigt eine schematische Darstellung eines Funktionsgraphen der Radialbeschleunigung in Abhängigkeit von der vergangenen Zeit jeweils für einen Fahrzeugreifen mit großer Profiltiefe und einen Fahrzeugreifen mit kleiner Profiltiefe, wobei der gezeigte Ausschnitt vor allem den Durchlauf des Beschleunigungssensors durch die Reifenaufstandszone und die daran angrenzenden Deformationsbereiche abbildet. Die Radialbeschleunigung ist auf der Ordinate Y und die Zeit auf der Abszisse X eingetragen. Der Fahrzeugreifen mit hoher Profiltiefe ist als durchgängige Linie und der Fahrzeugreifen mit niedriger Profiltiefe als gestrichelte Linie dargestellt.

Die beispielhaften Verläufe der Fig. 1 können beispielsweise beim Betrieb eines Fahrzeugluftreifens erhalten werden, der einen Beschleunigungssensor umfasst, welcher auf der Reifeninnenschicht angeordnet ist und Bestandteil eines Sensormoduls ist, das zumindest einen weiteren Sensor zur Bestimmung des Reifendrucks umfasst, wobei bei ansonsten im Wesentlichen gleichen Bedingungen, bspw. bezüglich Reifendruck und Umlaufgeschwindigkeit, unterschiedliche Abnutzungszustände und damit unterschiedliche Profiltiefen des Fahrzeugluftreifens vorgegeben werden.

Die Radialbeschleunigungswerte sind für ein Zeitintervall angegeben, in welchem der Beschleunigungssensor vollständig durch die Reifenaufstandszone des jeweiligen Fahrzeugreifens und die daran angrenzenden Deformationsbereiche bewegt wird, wobei der unmittelbare Zeitraum um den Eintritt und den Austritt des Beschleunigungssensors in die bzw. aus der jeweiligen Reifenaufstandszone herum, d.h. der Durchgang durch die Deformationsbereiche, jeweils an dem lokalen Maximum in den Datensätzen erkennbar ist. Die erfindungsgemäße Bewertungsoperation findet dabei nur statt, wenn die Beschleunigung des Fahrzeugreifens oberhalb eines bestimmten Schwellenwertes liegt, wobei die Bewertungsoperation beispielsweise alle 6 h des Betriebs wiederholt werden kann.

In dem erfindungsgemäßen Verfahren zur Bewertung der zeitlichen Entwicklung der Profiltiefe eines Laufstreifens eines Fahrzeugreifens mit einem Beschleunigungssensor, wird ausgehend vom Verlauf der gemessenen Beschleunigung im Zeitintervall für die dargestellten Fahrzeugreifen mit großer bzw. kleiner Profiltiefe ein erster Zeitpunkt A bzw. A' bestimmt, an dem die Beschleunigung unter einen ersten Grenzwert G1 sinkt. Hierauf folgend wird ein zweiter Zeitpunkt B bzw. B' bestimmt, an dem die Beschleunigung unter einen zweiten Grenzwert G2 sinkt und im Anschluss ein auf B bzw. B' folgender dritter Zeitpunkt C bzw. C`, an dem die Beschleunigung über den zweiten Grenzwert G2 steigt. Danach wird ein auf C bzw. C' folgender vierter Zeitpunkt D bestimmt, an dem die Beschleunigung wieder über den ersten Grenzwert G1 steigt.

Der erste Grenzwert G1 und der zweite Grenzwert G2 werden in dem in Fig. 1 dargestellten Beispiel anhand eines Richtwertes ermittelt, welcher der mittleren Beschleunigung in den Teilen des beobachteten Zeitintervalls entspricht, in denen der Beschleunigungssensor außerhalb der Reifenaufstandszone und der daran angrenzenden Deformationsbereiche bewegt wird. Der erste Grenzwert G1 entspricht im Wesentlichen dem Richtwert, während der zweite Grenzwert G2 in etwa 10% des Richtwertes entspricht.

Die jeweiligen Beschleunigungssensoren umfassen eine erste Datenverarbeitungseinrichtung, welche jeweils dazu eingerichtet ist, aus den bestimmten Zeitpunkten eine erste Zeitdifferenz U bzw. U' zwischen den Zeitpunkten A und D bzw. A' und D' sowie eine zweite Zeitdifferenz V bzw. V` zwischen den Zeitpunkten B und C bzw. B' und C' zu bestimmen. Aus den Zeitdifferenzen können beispielsweise mittels einer ersten Datenverarbeitungseinrichtung hieraus die Bewertungsquotienten Z bzw. Z' als V/U bzw. V'/U' berechnet werden. Die ermittelten Bewertungsquotienten Z bzw. Z' werden beispielsweise mittels drahtloser Datenübertragung an eine zweite Datenverarbeitungseinrichtung übermittelt, welche sich zum Beispiel im den Fahrzeugreifen enthaltenden Fahrzeug befinden kann. Aus Fig. 1 ist klar ersichtlich, dass der Bewertungsquotient Z kleiner als der Bewertungsquotient Z' sein muss, da V kleiner als V` und U größer als U' ist. Hierdurch wird bestätigt, dass für niedrige Profiltiefen der vorliegende gewählte Bewertungsquotient Z' größer ist als der Bewertungsquotient Z für hohe Profiltiefen.

Fig. 2 zeigt verschiedene mittels des erfindungsgemäßen Verfahrens ermittelte Bewertungsquotienten Z als Quotient aus V/U, dargestellt auf der Ordinate Y, in Abhängigkeit von der ersten Zeitdifferenz U, dargestellt auf der Abszisse X, d. h. für unterschiedliche Breiten der Reifenaufstandszone, für verschiedene Radlasten L und Abnutzungszustände W.

Der mit L bezeichnete Pfeil in der Abbildung indiziert somit größer werdende Lasten auf den Fahrzeugreifen. Der mit W bezeichnete Pfeil indiziert höhere Fahrzeugreifenabnutzungsgrade, d.h. niedrigere Profiltiefen. Aus dem Diagramm geht hervor, dass der Bewertungsquotient Z für abnehmende Profiltiefen bei allen Radlasten bzw. Reifenaufstandszonen für alle Abnutzungszustände zuverlässig zunimmt, wobei auch die relative Änderung des Bewertungsquotienten Z in Abhängigkeit vom Abnutzungszustand für alle untersuchten Radlasten vorteilhafterweise einen konsistenten und inhärent ähnlichen Verlauf zeigt.

Trotz der ausgeprägten Reduktion der notwendigen Rechenleistung und benötigten Speicherkapazität, insbesondere des Verzichts auf Differenzialbildungen, und der vorteilhaften Einsetzbarkeit bei bereits lediglich einem teilweisen Reifenumlauf, ist das erfindungsgemäße Verfahren entsprechend hochgradig geeignet, die zeitliche Entwicklung der Profiltiefe eines Fahrzeugreifens zuverlässig zu bewerten.

## Patentansprüche

1. Verfahren zur Bewertung der zeitlichen Entwicklung der Profiltiefe eines Laufstreifens eines Fahrzeugreifens mit einem Beschleunigungssensor, wobei der Beschleunigungssensor im Bereich des Laufstreifens innerhalb des Fahrzeugreifens oder auf der Reifeninnenseite angeordnet ist,
wobei für eine Bewertungsoperation die vom Beschleunigungssensor im Betrieb des Fahrzeugreifens erfahrene Beschleunigung in radialer Richtung während eines Zeitintervalls gemessen wird, wobei der Beschleunigungssensor im Zeitintervall durch die Reifenaufstandszone und die daran angrenzenden Deformationsbereiche bewegt wird,
**dadurch gekennzeichnet, dass**
ausgehend vom Verlauf der gemessenen Beschleunigung im Zeitintervall ein erster Zeitpunkt A bestimmt wird, an dem die Beschleunigung unter einen ersten Grenzwert G1 sinkt, wobei ein auf A folgender zweiter Zeitpunkt B bestimmt wird, an dem die Beschleunigung unter einen zweiten Grenzwert G2 sinkt, wobei ein auf B folgender dritter Zeitpunkt C bestimmt wird, an dem die Beschleunigung über den zweiten Grenzwert G2 steigt, wobei ein auf C folgender vierter Zeitpunkt D bestimmt wird, an dem die Beschleunigung über den ersten Grenzwert G1 steigt, wobei der erste Grenzwert G1 und der zweite Grenzwert G2 ausgehend vom Verlauf der Beschleunigung im Zeitintervall festgelegt werden,
wobei eine erste Zeitdifferenz U zwischen den Zeitpunkten A und D sowie eine zweite Zeitdifferenz V zwischen den Zeitpunkten B und C bestimmt wird, wobei ein Bewertungsquotient Z als Verhältnis von U und V bestimmt wird,
wobei die Bewertung der zeitlichen Entwicklung der Profiltiefe durch den Vergleich der Bewertungsquotienten Z erfolgt, welche für zwei oder mehrere verschiedenen Bewertungsoperationen bestimmt wurden.

2. Verfahren nach Anspruch 1, wobei der Beschleunigungssensor im Bereich des Laufstreifens auf der Reifeninnenseite angeordnet ist, bevorzugt auf der Reifeninnenschicht.

3. Verfahren nach einem der Ansprüche 1 oder 2, wobei der Beschleunigungssensor im Zeitintervall zumindest teilweise außerhalb der Reifenaufstandszone und der daran angrenzenden Deformationsbereiche bewegt wird, wobei der Beschleunigungssensor im Zeitintervall bevorzugt zumindest eine halbe, besonders bevorzugt zumindest eine vollständige, Rotation um die Rotationsachse des Fahrzeugreifens erfährt.

4. Verfahren nach einem der Ansprüche 1 bis 3, wobei der erste Grenzwert G1 und der zweite Grenzwert G2 in Abhängigkeit von einem im Zeitintervall bestimmten Richtwert festgelegt werden,
wobei der erste Grenzwert G1 bevorzugt auf einen Wert im Bereich von 70 bis 100 %, besonders bevorzugt von 80 bis 100 %, ganz besonders bevorzugt von 90 bis 100 %, insbesondere bevorzugt von 95 bis 100 %, des Richtwertes festgelegt wird, und/oder
wobei der zweite Grenzwert G2 bevorzugt auf einen Wert im Bereich von 5 bis 30 %, besonders bevorzugt von 5 bis 25 %, ganz besonders bevorzugt von 5 bis 20 %, insbesondere bevorzugt von 5 bis 15 %, des Richtwertes festgelegt wird.

5. Verfahren nach Anspruch 4, wobei der Richtwert der maximalen Beschleunigung im Zeitintervall entspricht, oder
wobei der Richtwert der mittleren Beschleunigung im Zeitintervall entspricht, oder
wobei der Richtwert der mittleren Beschleunigung in den Teilen des Zeitintervalls entspricht, in denen der Beschleunigungssensor außerhalb der Reifenaufstandszone und der daran angrenzenden Deformationsbereiche bewegt wird, oder
wobei der Richtwert in Abhängigkeit von der Fahrzeuggeschwindigkeit und/oder der Rotationsgeschwindigkeit des Fahrzeugreifens aus einer Speichereinheit abgerufen wird.

6. Verfahren nach einem der Ansprüche 1 bis 5, wobei der Bewertungsquotient Z als Quotient U/V oder V/U, bevorzugt V/U, bestimmt wird.

7. Verfahren nach einem der Ansprüche 1 bis 6, wobei die Bewertungsoperation nur durchgeführt wird, wenn die gemessene Beschleunigung oberhalb eines bestimmten Schwellenwertes liegt.

8. Verfahren nach einem der Ansprüche 1 bis 7, wobei der Beschleunigungssensor eine erste Datenverarbeitungseinrichtung umfasst und/oder wobei die gemessene Beschleunigung vom Beschleunigungssensor mittels drahtloser Datenübertragung an eine im Fahrzeug angeordnete zweite Datenverarbeitungseinrichtung übermittelt wird.

9. Verfahren nach einem der Ansprüche 1 bis 8, wobei die absolute Profiltiefe durch den Vergleich des Bewertungsquotienten Z mit vorbestimmten Bewertungsquotienten Z berechnet oder abgeschätzt wird, wobei bevorzugt eine oder mehrere weitere Informationen berücksichtigt werden, die ausgewählt sind aus der Gruppe bestehend aus Reifenmodell, Reifengröße, Reifendruck, Radlast und ursprünglicher Profiltiefe.

10. Verfahren nach einem der Ansprüche 1 bis 9, wobei ab einem vorgegebenen Wert für den Bewertungsquotienten Z ein Warnsignal ausgegeben wird, insbesondere auf eine digitale Anzeigevorrichtung in einem Fahrzeug und/oder in einer zentralen Wartungsstelle.

## Claims

1. Method for assessing the evolution of the tread depth of a tread of a vehicle tyre containing an acceleration sensor over time, the acceleration sensor being arranged inside the vehicle tyre or on the inside of the tyre in the region of the tread,
wherein an assessment operation involves the acceleration experienced by the acceleration sensor during operation of the vehicle tyre being measured in the radial direction during a time interval, wherein the acceleration sensor is moved through the tyre contact zone and the adjacent deformation regions in the time interval, **characterized in that**
the profile of the measured acceleration in the time interval is taken as a basis for determining a first time A, at which the acceleration falls below a first limit value G1, wherein a second time B, which follows A, at which the acceleration falls below a second limit value G2, is determined, wherein a third time C, which follows B, at which the acceleration rises above the second limit value G2, is determined,
wherein a fourth time D, which follows C, at which the acceleration rises above the first limit value G1, is determined, the first limit value G1 and the second limit value G2 being set on the basis of the profile of the acceleration in the time interval,
wherein a first time difference U between the times A and D and a second time difference V between the times B and C are determined, an assessment quotient Z being determined as the ratio of U and V,
wherein the evolution of the tread depth over time is assessed by comparing the assessment quotients Z that have been determined for two or more different assessment operations.

2. Method according to Claim 1, wherein the acceleration sensor is arranged on the inside of the tyre, preferably on the inner layer of the tyre, in the region of the tread.

3. Method according to either of Claims 1 and 2, wherein the acceleration sensor is moved outside the tyre contact zone and the adjacent deformation regions in at least portions of the time interval, the acceleration sensor preferably experiencing at least half of one, particularly preferably at least one complete, rotation about the axis of rotation of the vehicle tyre in the time interval.

4. Method according to one of Claims 1 to 3, wherein the first limit value G1 and the second limit value G2 are set on the basis of a benchmark determined in the time interval,
the first limit value G1 preferably being set to a value in the range from 70 to 100%, particularly preferably from 80 to 100%, quite particularly preferably from 90 to 100%, in particular preferably from 95 to 100%, of the benchmark, and/or
the second limit value G2 preferably being set to a value in the range from 5 to 30%, particularly preferably from 5 to 25%, quite particularly preferably from 5 to 20%, in particular preferably from 5 to 15%, of the benchmark.

5. Method according to Claim 4, wherein the benchmark corresponds to the maximum acceleration in the time interval, or
wherein the benchmark corresponds to the average acceleration in the time interval, or
wherein the benchmark corresponds to the average acceleration in the portions of the time interval in which the acceleration sensor is moved outside the tyre contact zone and the adjacent deformation regions, or
wherein the benchmark is retrieved from a memory unit on the basis of the vehicle speed and/or the rotation speed of the vehicle tyre.

6. Method according to one of Claims 1 to 5, wherein the assessment quotient Z is determined as the quotient U/V or V/U, preferably V/U.

7. Method according to one of Claims 1 to 6, wherein the assessment operation is performed only if the measured acceleration is above a determined threshold value.

8. Method according to one of Claims 1 to 7, wherein the acceleration sensor comprises a first data processing device and/or wherein the measured acceleration is relayed from the acceleration sensor to a second data processing device, arranged in the vehicle, by means of wireless data transmission.

9. Method according to one of Claims 1 to 8, wherein the absolute tread depth is calculated or estimated by comparing the assessment quotient Z with predetermined assessment quotients Z, consideration preferably being given to one or more further pieces of information selected from the group consisting of tyre model, tyre size, tyre pressure, wheel load and original tread depth.

10. Method according to one of Claims 1 to 9, wherein from a predefined value for the assessment quotient Z upwards a warning signal is output, in particular to a digital display apparatus in a vehicle and/or in a central service station.

## Revendications

1. Procédé d'évaluation de l'évolution dans le temps de la profondeur de sculpture d'une bande de roulement d'un pneu de véhicule avec un capteur d'accélération, le capteur d'accélération étant disposé dans la zone de la bande de roulement à l'intérieur du pneu de véhicule ou sur le côté intérieur du pneu,
pour une opération d'évaluation, l'accélération subie par le capteur d'accélération durant le fonctionnement du pneu du véhicule étant mesurée dans la direction radiale pendant un intervalle de temps, le capteur d'accélération étant déplacé dans l'intervalle de temps à travers la zone de contact du pneu et les zones de déformation adjacentes à celle-ci, **caractérisé en ce que**
en partant du tracé de l'accélération mesurée dans l'intervalle de temps, un premier instant A est déterminé, auquel l'accélération chute en dessous d'une première valeur limite G1, un deuxième instant B qui suit A étant déterminé,
auquel l'accélération chute en dessous d'une deuxième valeur limite G2, un troisième instant C qui suit B étant déterminé, auquel l'accélération augmente au-dessus de la deuxième valeur limite G2, un quatrième instant D qui suit C étant déterminé, auquel l'accélération augmente au-dessus de la première valeur limite G1, la première valeur limite G1 et la deuxième valeur limite G2 étant spécifiées à partir du tracé de l'accélération dans l'intervalle de temps,
une première différence de temps U entre les instants A et D et une deuxième différence de temps V entre les instants B et C étant déterminées, un quotient d'évaluation Z étant déterminé en tant que rapport de U et V,
l'évaluation de l'évolution dans le temps de la profondeur de sculpture s'effectuant par comparaison des quotients d'évaluation Z qui ont été déterminés pour deux opérations d'évaluation différentes ou plus.

2. Procédé selon la revendication 1, le capteur d'accélération étant disposé dans la zone de la bande de roulement sur le côté intérieur du pneu, de préférence sur la couche intérieure du pneu.

3. Procédé selon l'une des revendications 1 ou 2, le capteur d'accélération étant déplacé dans l'intervalle de temps au moins partiellement en dehors de la zone de contact du pneu et des zones de déformation adjacentes à celle-ci, le capteur d'accélération subissant de préférence, dans l'intervalle de temps, au moins une demi-rotation, de préférence au moins une rotation complète, autour de l'axe de rotation du pneu du véhicule.

4. Procédé selon l'une des revendications 1 à 3, la première valeur limite G1 et la deuxième valeur limite G2 étant spécifiées en fonction d'une valeur indicative déterminée dans l'intervalle de temps,
la première valeur limite G1 étant de préférence spécifiée à une valeur dans la plage de 70 à 100 %, de préférence de 80 à 100 %, de manière tout à fait préférée de 90 à 100 %, de manière particulièrement préférée de 95 à 100 %, de la valeur indicative, et/ou
la deuxième valeur limite G2 étant de préférence spécifiée à une valeur dans la plage de 5 à 30 %, de préférence de 5 à 25 %, de manière tout à fait préférée de 5 à 20 %, de manière particulièrement préférée de 5 à 15 %, de la valeur indicative.

5. Procédé selon la revendication 4, la valeur indicative correspondant à l'accélération maximale dans l'intervalle de temps, ou
la valeur indicative correspondant à l'accélération moyenne dans l'intervalle de temps, ou
la valeur indicative correspondant à l'accélération moyenne dans les parties de l'intervalle de temps pendant lesquelles l'accéléromètre est déplacé en dehors de la zone de contact du pneu et des zones de déformation adjacentes à celle-ci, ou la valeur indicative étant appelée à partir d'une unité de mémoire en fonction de la vitesse du véhicule et/ou de la vitesse de rotation du pneu du véhicule.

6. Procédé selon l'une des revendications 1 à 5, le quotient d'évaluation Z étant déterminé en tant que quotient U/V ou V/U, de préférence V/U.

7. Procédé selon l'une des revendications 1 à 6, l'opération d'évaluation n'étant effectuée que si l'accélération mesurée est supérieure à une valeur seuil déterminée.

8. Procédé selon l'une des revendications 1 à 7, le capteur d'accélération comportant un premier dispositif de traitement de données et/ou l'accélération mesurée étant transmise par le capteur d'accélération au moyen d'une transmission de données sans fil à un deuxième dispositif de traitement de données disposé dans le véhicule.

9. Procédé selon l'une des revendications 1 à 8, la profondeur de sculpture absolue étant calculée ou estimée par comparaison du quotient d'évaluation Z avec des quotients d'évaluation Z prédéterminés, de préférence en tenant compte d'une ou plusieurs informations supplémentaires qui sont choisies dans le groupe constitué par le modèle de pneumatique, la taille du pneumatique, la pression du pneumatique, la charge de la roue et la profondeur de sculpture initiale.

10. Procédé selon l'une des revendications 1 à 9, un signal d'avertissement étant émis à partir d'une valeur prédéterminée pour le quotient d'évaluation Z, notamment sur un dispositif d'affichage numérique dans un véhicule et/ou dans un centre de maintenance central.
